# EUROPÄISCHE PATENTANMELDUNG

(11) **EP 1 074 870 A2**
(43) Veröffentlichungstag der Anmeldung: **07.02.2001**
(21) Anmeldenummer: 00116725.3
(22) Anmeldetag: 02.08.2000
(51) Int. Cl.: G02B 6/44

(54) **Vorrichtung zum Abisolieren von unmantelten Kabeln**

(30) Priorität: 02.08.1999 DE 19936345
(71) Anmelder: SCC Special Communication Cables GmbH & Co. KG, 81303 München (DE)
(72) Erfinder: Reichstätter, Erwin, 96465 Neustadt (DE); Engel, Matthias, 96242 Sonnefeld (DE); Zhan, Gao, Dr.-Ing., 96450 Coburg (DE)
(74) Vertreter: Viering, Jentschura & Partner

(57) **Zusammenfassung**

Vorrichtung zum Abisolieren von ummantelten Kabeln, insbesondere von Lichtwellenleiter-Adern mit einer Kabelführung und zumindest einer Klinge, wobei die Klinge mit Bezug auf die Kabelführung in einer Weise angeordnet ist, die ein Abspanen von zumindest einem Teil der Ummantelung erlaubt.

## Beschreibung

Die vorliegende Erfindung betrifft eine Vorrichtung zum Abisolieren von ummantelten Kabeln, insbesondere von Lichtwellenleiter-Adern (LWL-Ader), die eine Lichtwellenheiter-FAser (LWL-Faser) und eine isolierende Ummantelung aufweisen.

Bisher wurden Lichtwellenleiter-Adern wie auch andere Kabel an ihren Enden dadurch abisoliert, daß die Ummantelung ringförmig oder umfangsmäßig mit Hilfe einer Klinge aufgetrennt wurde, wonach man den abgetrennten Teil der Ummantelung abstreifen konnte. Das Abstreifen der abgetrennten Ummantelung kann bei der bekannten Vorrichtung entweder unmittelbar mit der Klinge selbst erfolgen, oder auch mit einer separaten Eingriffseinrichtung. Demzufolge umfaßt eine gattungsgemäße Vorrichtung zum Abisolieren von ummantelten Kabeln eine Kabelführung und eine Klinge, wobei die Kabelführung dazu dient, eine exakte Schnittiefe der Klinge einzustellen. Mit der bekannten Vorrichtung lassen sich jedoch nur relativ kurze Endabschnitte von ummantelten Kabeln abisolieren, da ansonsten die erforderliche Kraft zum Abstreifen der abgetrennten Ummantelung zu groß wird. Desweiteren besteht insbesondere bei Lichtwellenleiter-Adern die Gefahr, daß bei zu hoher angelegter Kraft eine Verformung oder Beschädigung der hochempfindlichen Faser auftritt. Schließlich ermöglicht es die bekannte Vorrichtung nicht, einen mittleren Kabelabschnitt abzuisolieren, wie es zum Beispiel zur Bildung von Knotenpunkten oder auch zur Inspektion von Kabeln oder Lichtwellenleitern teilweise erforderlich ist.

Dementsprechend ist es Aufgabe der vorliegenden Erfindung, eine gattungsgemäße Vorrichtung derart weiterzubilden, daß beliebige Abschnitte und insbesondere praktisch beliebig lange Abschnitte eines ummantelten Kabels, insbesondere einer Lichtwellenleiter-Ader, abisoliert werden können.

Erfindungsgemäß wird diese Aufgabe durch eine Vorrichtung mit den Merkmalen des Anspruches 1 gelöst. Bevorzugte Ausführungsformen der Erfindung sind in den abhängigen Ansprüchen aufgeführt.

Erfindungsgemäß zeichnet sich die Vorrichtung zum Abisolieren von ummantelten Kabeln, insbesondere von Lichtwellenleiter-Adern, mit einer Kabelführung und zumindest einer Klinge dadurch aus, daß die Klinge mit Bezug auf die Kabelführung in einer Weise angeordnet ist, die ein Abspanen von zumindest einem Teil der Ummantelung erlaubt. Somit wird bei der erfindungsgemäßen Vorrichtung durch jede Klinge die Ummantelung im wesentlichen in der Erstreckungsrichtung des Kabels spanend abgetragen, während das Kabel oder der Lichtwellenleiter durch die Vorrichtung geführt wird. Dementsprechend kann die Abisolierung über eine praktisch unbeschränkte Länge erfolgen, wobei auch Abisolierungen an Mittelabschnitten von Kabeln oder Lichtwellenleitern möglich sind. Anders ausgedrückt, wird das ummantelte Kabel beziehungsweise die Lichtwellenleiter-Adern mit der erfindungsgemäßen Vorrichtung 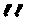 geschält". Die Kabelführung führt das zu bearbeitende Kabel vorteilhafterweise sowohl flußaufwärts liegend als auch flußabwärts liegend der Klinge, betrachtet bezüglich der Bewegungsrichtung des Kabels durch die Vorrichtung.

Bei einer bevorzugten Ausführungsform ist die Klinge mit Bezug auf die Kabelführung zustellbar. Indem die Klinge zustellbar ausgstaltet ist, läßt sich die Vorrichtung auf verschiedene Kabeltypen, insbesondere auf verschiedene Isolierungsdicken oder Aderdurchmesser einstellen. Um die Klinge zustellbar zu gestalten, können verschiedenste Anordnungen zum Einsatz kommen, wie zum Beispiel in der Klinge vorgesehene Langlöcher oder auch dem Fachmann geläufige Verstellschrauben.

Zusätzlich oder alternativ ist die Klinge bevorzugt winkelmäßig bezüglich der Kabelführung einstellbar. Indem die Klinge winkelmäßig bezuglich der Kabelführung einstellbar ist, kann die Vorrichtung auf unterschiedliche Kabeltypen angepaßt werden. Insbesondere bei unterschiedlichen Ummantelungsdicken oder auch bei unterschiedlichen Materialien der Ummantelung kann durch eine winkelmäßige Einstellung ein optimaler Spanwinkel der Klinge eingestellt werden. Wenn beispielhaft ein Kabel mit dünnem Mantel abzuisolieren ist, sollte der Winkel der Klinge mit Bezug auf die Kabelführung möglichst flach eingestellt sein, sodaß sich beim Abspanen der Isolierung das Kabel selbst und insbesondere die darin enthaltene Ader nicht verformt. Somit kann eine Beschädigung der Ader durch die Klinge vermieden werden.

Vorteilhafterweise bildet die Klinge mit dem Kabel einen Winkel von zwischen 10 und 60°, insbesondere von zwischen 30 und 45°. Bei einer insbesondere bevorzugten Ausführungsform bildet die Klinge bezüglich dem Kabel einen Winkel von etwa 37°. Die oben angegebenen Winkelbereiche haben sich als geeignete Spanwinkel für derzeit verfügbare Kabel und Lichtwellenleiter-Adern gezeigt.

Wenn das Kabel oder die Lichtwellenleiter-Ader über eine große Länge abzuisolieren ist, umfaßt die Vorrichtung vorteilhafterweise einen Spanumlenkabschnitt, so daß sich der abgetrennte Span frei bewegen kann. Der Spanumlenkabschnitt kann beispielhaft eine schräge Fläche oder auch eine gewölbte Fläche sein, wenn zum Beispiel eine Spiralbildung des abgetrennten Spanes gewünscht wird.

Bei einer bevorzugten Ausführungsform ist die Kabelführung flußabwärts liegend der Klinge größen- und/oder formmäßig auf das bearbeitete Kabel angepaßt. Durch diese Ausgestaltung der Kabelführung kann eine verbesserte Führung des Kabels erreicht werden. Beispielhaft weist die Kabelführung oberhalb der Klinge bei Verwendung eines Kabels oder einer Lichtwellenleiter-Ader mit kreisförmigem Schnitt einen entsprechenden kreisförmigen Durchmesser auf, welcher unterhalb der Klinge praktisch in die Form eines Ovals übergeht oder auch der Form eines Kreises abzüglich eines Kreisabschnittes je verwendeter Klinge entspricht. Durch diese Ausgestaltung kann eine Verdrillung oder auch Verdrehung des Kabels in der Vorrichtung vermieden werden, so daß bei Verwendung von zum Beispiel lediglich einer Klinge die abspanende Abisolierung des Kabels an einer vorbestimmten Position des Kabels erfolgen kann.

Vorteilhafterweise ist die Kabelführung zumindest teilweise trichterförmig ausgebildet. Wenn zum Beispiel das Einführende trichterförmig ausgebildet ist, kann der Benutzer einfacher das Kabel oder die Lichtwellenleiter-Ader in die Vorrichtung einführen, selbst wenn die Kabelführung das Kabel praktisch spielfrei aufnehmen kann. Desweiteren wird durch die trichterförmige Ausgestaltung das Risiko einer Beschädigung des Kabels durch Umknicken an Kanten verringert.

Bevorzugt umfaßt die Vorrichtung ein Stützelement mit einem Hohlraum. Ein Teil der Vorrichtung, umfassend die Kabelführung, die Klingenhalterung und die Klinge selbst, kann somit von dem Stützelement in solch einer Weise getragen werden, daß das abisolierte Kabel in oder durch den Hohlraum des Stützkörpers treten kann.

Vorteilhafterweise wird die Abisolierlänge durch die Abmessung des Stützkörpers und/oder des Hohlraumes bestimmt. Wenn zum Beispiel nach dem Vorbeitreten an der Klinge oder den Klingen das abisolierte Kabel in den Hohlraum des Stützkörpers geführt wird und der Hohlraum eine Bodenfläche aufweist, so kann das Kabel abisoliert werden, bis das Ende die Bodenfläche berührt. Somit kann eine voreingestellte Abisolierlänge an einer Vielzahl von Kabeln oder Lichtwellenleitern bewirkt werden.

Um die Klinge vor äußeren Einwirkungen zu schützen und um das Verletzungsrisiko eines Benutzers zu minimieren, ist die Schneidkante der Klinge vorteilhafterweise vollständig abgedeckt, zum Beispiel durch eine Befestigungsbacke, mit welcher die Klinge an der Vorrichtung fixiert wird.

Obwohl die erfindungsgemäße Vorrichtung mit einer beliebigen Anzahl an Klingen vorgesehen sein kann, ist es bevorzugt, daß eine gerade Anzahl an Klingen vorgesehen ist, die insbesondere einander gegenüberliegen. Wenn zum Beipiel zwei einander gegenüberliegende Klingen beidseitig mit dem zu bearbeitenden Kabel in Eingriff treten, kann ein Kräftegleichgewicht gebildet werden, so daß eine Verformung des Kabels, und insbesondere der Ader, nicht stattfindet.

Bei der Verwendung von paarweise gegenüberliegenden Klingen sind diese bevorzugt voneinander um zumindest dem Durchmesser der Faser im Kabel beabstandet. Somit kann eine Beschädigung der Faser praktisch ausgeschlossen werden.

Weitere Vorteile und Merkmale der Erfindung ergeben sich aus der folgenden detaillierten Beschreibung einer derzeit bevorzugten Ausführungsform der Erfindung unter Bezugnahme auf die beigefügten Zeichnungen, in welchen gilt:
Fig. 1 zeigt in perspektivischer Ansicht einer erfindungsgemäße Vorrichtung.
Fig. 2 zeigt eine teilweise weggebrochene Seitenansicht des oberen Teiles der in Fig. 1 gezeigten Vorrichtung.
Fig. 3 zeigt eine Querschnittsansicht durch den in Fig. 2 dargestellten Teil der bevorzugten Ausführungsform.
Fig. 4a, b und c zeigen jeweils eine Frontansicht, eine Seitenansicht und eine Aufsicht eines weiteren Bestandteiles der Vorrichtung gemäß der in Fig. 1 gezeigten Ausführungsform.
Fig. 5a und b zeigen eine Aufsicht und eine Querschnittsansicht eines Stützelementes, als unteren Teil der Vorrichtung gemäß der in Fig. 1 gezeigten Ausführungsform.

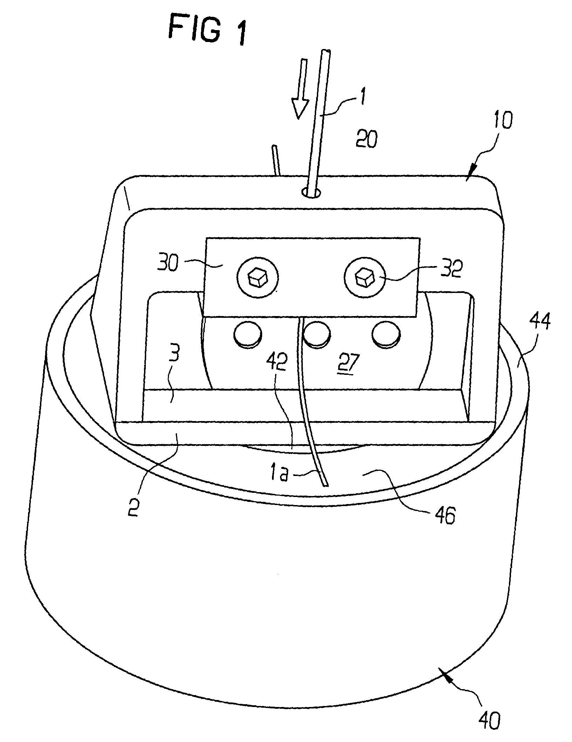

In Fig. 1 ist perspektivisch eine bevorzugte Ausführungsform der erfindungsgemäßen Vorrichtung dargestellt. In der dargestellten Ausführungsform besteht die Vorrichtung aus einem oberen Teil und einem als Hohlzylinder ausgebildeten Stützkörper 14. Der obere Teil umfaßt eine Basisplatte 2 und einen mit der Basisplatte 2 verbundenen Klingenhalterungsabschnitt 10. Der Abschnitt 10 weist an seinem oberen Ende eine Öffnung auf, die den Anfang der Kabelführung 20 bildet. In diese Kabelführung 20 ist in der dargestellten Ausführungsform ein Kabel 1 eingeführt. In einem rückspringenden Bereich des Abschnittes 10 ist eine Klinge 27 aufgenommen, die mittels einer Backe 30 und Schrauben 32 fixiert ist. In der dargestellten Ausführungsform ist ferner der von dem Kabel 1 spanmäßig abgetrennte Teil der Isolierung dargestellt, welcher nach dem Abtrennen auf der sichtbaren Seite der Klinge verläuft. Der verbleibende Rest des Kabels verläuft in der dargestellten Ausführungsform hinter der Klinge und ist daher nicht sichtbar. Wie es deutlich zu sehen ist, wird die Schneidkante, welche sich am oberen Ende der Klinge 27 befindet, vollständig von der Backe 30 bedeckt, so daß sie vor äußeren Einwirkungen geschützt ist. Desweiteren kann sich ein Benutzer durch die kaschierte Anordnung der Schneidkante an der Vorrichtung insgesamt kaum verletzen. Die Fläche 3 der Basisplatte 2 dient in der dargestellten Ausführungsform als Spanumlenkung, so daß der abgetrennte Span an Isolationsmaterial abgelenkt wird. Wie dargestellt, ist der obere Teil der Vorrichtung an einem hohlzylinderförmig ausgebildeten Stützkörper 40 gelagert. Der Stützkörper 40 umfaßt eine Standfläche 46, auf welcher der obere Teil ruhen kann. Der Hohlzylinder 40 weist desweiteren einen Hohlraum 42 auf, in welchem das Kabel nach dem Abisolieren treten kann. Um ein Verrutschen des oberen Teiles bezüglich des Stutzkörpers zu verhindern, weist der Stützkörper einen umlaufenden Wulst 44 auf, welcher eine Anschlagkante für die Basisfläche 2 des oberen Teiles definiert.

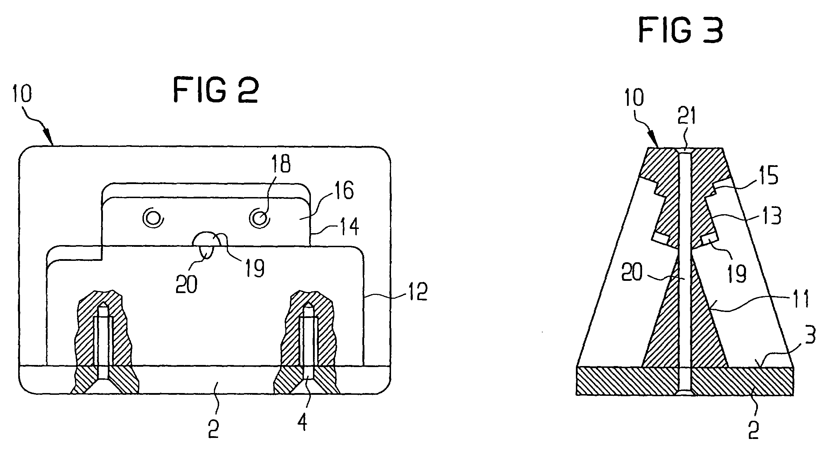

In Fig. 2 ist der obere Teil der in Fig. 1 gezeigten Vorrichtung in Seitenansicht dargestellt, wobei Teile zur Verdeutlichung weggebrochen sind, und wobei die in Fig. 1 dargestellte Backe 30 mit den Schrauben 32 und die Klinge 27 nicht dargestellt sind. Die Basisplatte 2 ist mittels Schraube 4 mit dem oberen Abschnitt 10 verschraubt. Wie bereits erwähnt, weist der obere Abschnitt 10, welcher in der gezeigten Ausführungsform aus Aluminium oder einem ähnlichen Metall gefräst ist, eine Aussparung 12 auf, die zur Aufnahme der Klinge geeignet ist. Am oberen Ende der Heckfläche der Aussparung 12, welche schräggestellt ist, wie später erläutert wird, befindet sich ein Teil der Kabelführung 20. Oberhalb der Vertiefung 12 befinden sich weitere Vertiefungen 14 und 16, die zur Aufnahme der in Fig. 1 gezeigten Backe 30 dienen. Desweiteren sind Gewindebohrungen 18 vorgesehen, in welche die in Fig. 1 dargestellten Schrauben 32 greifen können.

In Fig. 3 ist eine Querschnittsansicht des oberen Teiles, wie in Fig. 2 gezeigt, dargestellt. Die Schnittansicht verläuft im wesentlichen mittig durch die Darstellung von Fig. 2 und zeigt in der Mitte davon die Kabelführung 20. Wie dargestellt, ist die Kabelführung 20 am oberen Ende mit einem Trichter 21 versehen, der das Einführen des zu bearbeitenden Kabels erleichtert. Die Kabelführung 20 erstreckt sich ebenfalls durch die Basisplatte 2. Wie dargestellt, wird durch die Vertiefung 12 eine Anlagefläche 11 bereitgestellt, an welcher die nicht dargestellte Klinge 27 ruhen kann. Wie es deutlich zu erkennen ist, verläuft die Anlagefläche 11 abgewinkelt bezüglich der Kabelführung 20, wobei es dem oberen Ende einer Klinge ermöglicht ist, zumindest teilweise in die Kabelführung 20 hineinzuragen. Somit kann bei angeordneter Klinge die Isolierung spanend von dem Kabel abgehoben werden. Wie dargestellt, bilden die Vertiefungen 14 und 16 einen Aufnahmeraum für die zur Befestigung der Klinge vorgesehene Backe 30. Obwohl nicht dargestellt, wird der Fachmann erkennen, daß verschiedene Zustell- und/oder Einstellmechanismen vorgesehen werden können, insbesondere um die Position der Klinge bezüglich dem Winkel einzustellen oder auch bezüglich dem Grad, bei welchem die Klinge in die Kabelführung 20 vorragen kann. In der dargestellten Ausführungsform sind auf beiden Seiten symmetrische Vorkehrungen getroffen, um beidseitig des zu bearbeitenden Kabels zwei gegenüberstehende Klingen anordnen zu können.

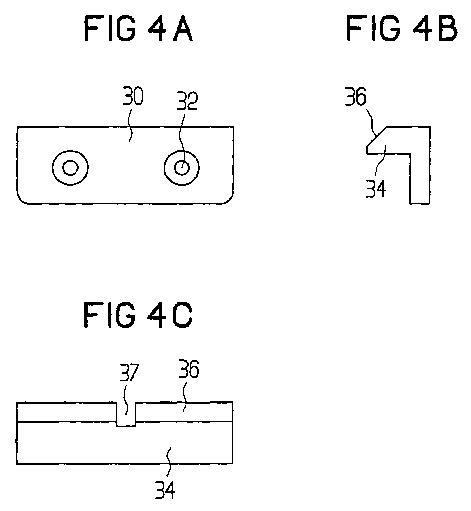

In den Fig. 4a, b und c sind jeweils dargestellt eine Frontansicht, eine Seitenansicht und eine Aufsicht der in Fig. 1 dargestellten Backe 30, die zur Fixierung der Klinge 27 dient. Die Backe 30 entspricht in ihrer Form im wesentlichen den in Fig. 2 dargestellten Aussparungen 14, 16 und umfaßt Bohrungen 32, die mit den Bohrungen 18 des Abschnittes 10 ausgerichtet sind. Um eine Versteilmöglichkeit bereitzustellen, könnten diese Bohrungen 32 ebenfalls als Langlöcher ausgebildet sein und zusätzlich oder alternativ eine winkelmäßige Einstellbarkeit erlauben. Auf die Ausgestaltungen der winkelmäßigen und positionsmäßigen Justierung der Klinge soll hierin nicht weiter eingegangen werden, da diese Möglichkeiten dem Fachmann geläufig sind. Es sollte jedoch erwähnt werden, daß beispielhaft durch Ausgestaltung der Schrägfläche 36 eine entsprechende Schrägstellung der Klinge erzielt werden kann.

Um es dem abgehobenen Span an Isolationsmaterial bzw. Ummantelung zu ermöglichen, frei abgehoben zu werden, weist die Backe 30 an einer entsprechenden Position eine Aussparung 37 auf.

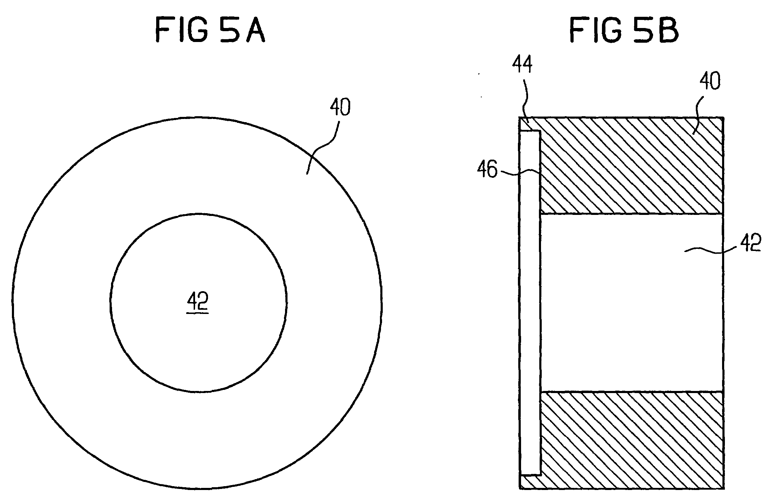

Schließlich ist in den Fig. 5a und 5b noch der in Fig. 1 gezeigte Stützkörper 40 im Detail dargestellt. Der Stützkörper 40 ist in der gezeigten Ausführungsform ebenfalls aus Aluminium oder einem anderen geeigneten Material gebildet und weist eine Höhe auf, die ausreichend ist, um zumindest die gewünschte Länge an abisoliertem Kabel aufzunehmen. An der Oberseite des Stützkörpers 40 weist dieser eine Auflagefläche 46 auf, an welcher der obere Teil zumindest teilweise ruhen kann. Bevorzugt verläuft diese Stützfläche 46 im wesentlichen planparallel zu der Bodenplatte 2 des oberen Teiles. Die Standfläche 46 kann desweiteren eine zusätzliche Spanumlenkfunktion erfüllen, wie es in Fig. 1 dargestellt ist. Um ein Verrutschen des oberen Teiles bezüglich dem Stützelement 40 zu vermeiden, weist dieser einen zumindest teilweise umlaufenden Wulst 44 auf.

Zusammenfassend läßt sich feststellen, daß mit der erfindungsgemäßen Vorrichtung beliebige Abschnitte und beliebige Längen von Kabeln, insbesondere Lichtwellenleiter-Adern, abisoliert werden können. Die Vorrichtung ermöglicht einen vielseitigen Einsatz und kann eingestellt werden auf unterschiedlichste Parameter des zu bearbeitenden Kabels, wie zum Beispiel Gesamtkabeldurchmesser, Ummantelungsdicke, Materialeigenschaften der Ummantelung und so weiter. Der Fachmann wird desweiteren erkennen, daß verschiedene Modifikationen bezüglich der beschriebenen bevorzugten Ausführungsform möglich sind, wobei diese als in den Ansprüchen enthalten oder als Äquivalente zu beachten sind. Hierzu gehören insbesondere verschiedene Materialauswahlen für die Vorrichtung selbst, unterschiedliche Klingentypen, wie zum Beispiel Rasierklingen, sowie die mehrfach angesprchenen Zustell- und Verstellmöglichkeiten, die dem Fachmann geläufig sind.

## Patentansprüche

1. Vorrichtung zum Abisolieren von ummantelten Kabeln, insbesondere von Lichtwellenleiter-Adern mit einer Kabelführung (20) und zumindest einer Klinge (27), dadurch gekennzeichnet, daß die Klinge (27) mit Bezug auf die Kabelführung (20) in einer Weise angeordnet ist, die ein Abspanen von zumindest einem Teil der Ummantelung erlaubt.

2. Vorrichtung nach Anspruch 1, dadurch gekennzeichnet, daß die Klinge (27) mit Bezug auf die Kabelführung (20) zustellbar ist.

3. Vorrichtung nach Anspruch 1 oder 2, dadurch gekennzeichnet, daß die Klinge (27) mit Bezug auf die Kabelführung winkelmäßig einstellbar ist.

4. Vorrichtung nach einem der Ansprüche 1 bis 3, dadurch gekennzeichnet, daß die Klinge (27) mit dem Kabel (1) einen Winkel von zwischen 10° und 60°, insbesondere von zwischen 30° und 45° bildet.

5. Vorrichtung nach einem der vorangegangenen Ansprüche, dadurch gekennzeichnet, daß ein Spanumlenkabschnitt (3, 46) vorgesehen ist.

6. Vorrichtung nach einem der vorangegangenen Ansprüche, dadurch gekennzeichnet, daß die Kabelführung (20) flußabwärts der Klinge (27) liegend größen- und/oder formmäßig auf das bearbeitete Kabel angepaßt ist.

7. Vorrichtung nach einem der vorangegangenen Ansprüche, dadurch gekennzeichnet, daß die Kabelführung (20) zumindest teilweise trichterförmig ausgebildet ist.

8. Vorrichtung nach einem der vorangegangenen Ansprüche, dadurch gekennzeichnet, daß sie ein Stützelement (40) mit einem Hohlraum (42) aufweist.

9. Vorrichtung nach Anspruch 8, dadurch gekennzeichnet, daß die Abisolierlänge durch die Abmessungen des Stützkörpers (40)und/oder des Hohlraumes (42) bestimmt ist.

10. Vorrichtung nach einem der vorangegangenen Ansprüche, dadurch gekennzeichnet, daß die Schneidkante der Klinge (27) vollständig verdeckt ist.

11. Vorrichtung nach einem der vorangegangenen Ansprüche, dadurch gekennzeichnet, daß zwei Klingen (27) vorgesehen sind, die insbesondere einander gegenüberliegend beidseitig des Kabels (1) angeordnet sind.

12. Vorrichtung nach Anspruch 11, dadurch gekennzeichnet, daß die zwei Klingen (27) voneinander um zumindest den Durchmesser der Ader des Kabels (1) beabstandet sind.
